# EUROPEAN PATENT SPECIFICATION

(11) **EP 1 609 842 B1**
(45) Date of publication and mention of the grant of the patent: **02.10.2013**
(21) Application number: 03816440.6
(22) Date of filing: 07.08.2003
(51) Int. Cl.: C10G 25/00, C10G 25/12, C10G 27/04, C10G 53/08, C02F 1/28, C02F 1/72

(54) **METHOD FOR PURIFYING A LIQUID MEDIUM**
METHODE ZUR REINIGUNG EINES FLÜSSIGEN MEDIUMS
METHODE DE PURIFICATION D'UN MILIEU LIQUIDE

(30) Priority: 28.03.2003 EA 200300311
(43) Date of publication of application: 28.12.2005
(73) Proprietor: 21st Century Technologies, LLC, Los Angeles, CA 90025 (US)
(72) Inventor: BEREZUTSKIY, Vladimir Mihailovich, Moscow, 111024 (RU)
(74) Representative: AMMANN PATENTANWÄLTE AG BERN
(86) International application number: PCT/IB2003/003551
(87) International publication number: WO 2004/085576

(56) References cited:
- WO-A-01/05717
- WO-A-01/42392
- DE-B- 1 218 998
- FR-A- 760 430
- GB-A- 944 054
- GB-A- 1 083 286
- US-A- 6 118 037
- US-A1- 2002 009 404

## Description

The present invention relates to the separation and removal of impurities contained in liquids, i.e. chemical compounds or substances, the presence of which is not desirable in liquids. As used below "liquid medium" shall be understood to mean hydrocarbons, carbon-containing liquids or aqueous solutions.

### Background of the Invention

This invention is related both to a process for the treatment of contaminated water, oil, hydrocarbons and liquid carbonaceous streams in general, and more particularly, to a process for the selective removal of metals, nitrogen compounds, hydrogen sulfide and other sulfur species, aromatics, poly nuclear aromatics and specific hydrocarbon species. For this process a special sorbent impregnated with a particulate catalyst is used for oxidation of selective target element or compound.

Over the years various methods have been applied for separation of specific hydrocarbon liquids from water and other polar solutions. In particular there always has been existed a need for an efficient and economical process to remove oil or petroleum products from bodies of water. This method should permit to recycle and efficiently reuse of at least a portion of the hydrocarbon contaminant recovered.

A constant demand for petroleum products among the industrially developed countries ensures a necessity for transportation of higher volume of oil with a corresponding release of oil products into the environment. In order to prevent such detrimental economic and ecological impact associated with the releases of petroleum products into the environment several techniques have been generated for limiting the spread of oil and petroleum products contaminating the environment. The practice however has proved that as a rule, all these techniques are expensive, labor intensive and do not provide optimal results.

In order to avoid great expenses and often intractable problems associated with separating liquids from liquids, absorbents always have been used to remove hydrocarbons from aqueous solutions. These sorbent materials absorb the oil. Correspondingly, effective sorbents should first absorb the hydrocarbon contaminants, but not the water. In other words, the best materials for these applications are such ones, which are both oleophilic and hydrocarbon resistant. Among the absorbent materials that have been proposed to remove oils from water are wood chips, sawdust, some of clays, polymeric materials, cellulose materials and many others. Most of the sorbents used for such purposes are not efficient enough and cannot be reused. Accordingly, they have to be destroyed or discarded along with the petroleum product sorbed. It is important to emphasize that one of the major drawbacks in use of these materials is the prohibitive cost connected with the preparation of all the arrangements as well as utilization of the sorbent which can not be recycled.

In an effort to overcome some difficulties referring to the use of sorbent materials, for the bodies of water contaminated with hydrocarbons, hydrocarbon resistant sorbent materials have been used. Hydrocarbon resistant sorbent materials differ from ordinary sorbents in that way they distribute associated liquid hydrocarbons in a film over the surface of the adsorbing particle. Absorption, on the contrary, is associated with the uptake of the liquid hydrocarbon by the whole body of the solid sorbent that depends directly on how porous the structure of the sorbent is. Mostly used sorbent materials are the following: fine sands, clays, solid inorganic compounds, polymers and treated natural fibers, such as cotton fibers, coconut husk, peat fibers, jute, wool, that may be coated with such hydrocarbon resistant materials as, for example, rubber, or paraffin in order to provide a floating sorbent. Yet, such coated fiber sorbents are extremely labor intensive to be manufactured, and require relatively sophisticated facilities for their production. Besides, these sorbents can not be recycled that makes them prohibitively expensive to employ. Similarly, some other sorbents, such as polymers, for example, may be too expensive for mass utilization and, if they are not easily biodegradable, may give the same environmental impact.

U.S. Patent # 3,891,574 discloses in details a sphere of carbon consisting of a porous shell enclosing an empty space. Coating a core material with the carbon first, and then removing this core through thermal decomposition can obtain such carbon particle. Basing on the data presented, this process forms a heliosphere having a bulk density of approximately 275 g/l and active both interior and exterior surfaces. Among other uses, the resultant material may be used for adsorption of crude oil. However, in addition to being fairly heavy, the material has a relatively low loading capacity of approximately 1.5 times its weight after extended exposure to the oil.

In accordance with the above, the major objective of the present invention is to provide an efficient and effective method for separating hydrocarbon liquids from water and other polar liquid bodies by the use of the sorbents, which have relatively low cost and can be reused. In addition to the previously mentioned materials, it is disclosed precisely in this invention that a particulate catalyst impregnated carbon can be used as an efficient sorbent of liquid hydrocarbons in an aqueous environment. The resultant particulate catalyst impregnated carbon is usually in the form of small crystallites having dimensions considerably smaller than those, which are observed in natural graphite. Adsorption properties of such particulate catalyst impregnated carbon materials are generally associated with the amount of inner surface area and the selectivity of the impregnated catalyst.

Contaminated waters normally have a high content of dissolved iron (ferrous and/or ferric) and some other dissolved main group and/or transition metals (non-ferrous and non-ferric), such, as, for example, copper, zinc, aluminum, manganese, silver, lead, cadmium, gold, nickel, arsenic, and other materials contained in industrial wastewaters. The chemical composition of waters contaminated with these metals can vary substantially depending upon the source of contamination or origin of the water itself.

One of the most important problems facing the mining and mineral processing industry is to provide disposal and management of sulfide containing tailings. In certain cases, tailings containing pyrite, marcasite and pyrrhotite create particular problems in so far as they are immediately oxidized due to weathering and contaminate mine drainage with acid waters. Rate of oxidation depends upon the sulfide content, morphology, bacterial activity, ferric ion concentration, and availability of oxygen. The acid waters contained in mine drainage have a high concentration of iron and other dissolved metals. The pH level for these waters is an indication for their excessive acidity. Ideally, all wastewaters containing heavy metals, galvanizing wastes, plating wastes and hardening wastes as well as pickling solutions and rinses must be treated to remove contaminated metals before the above wastes are discharged into rivers and other bodies of water.

For the treatment of mine drainage contaminated with acid waters two principal methods have been basically used. The contamination preventive measures have been taken, as follows: attempts to remove sulfides, control the bacterial activity, control oxygen diffusion, coat the sulfide particles and agglomerate the tailings. In order to treat from contamination the following techniques have been executed: neutralization, precipitation of hydroxides, precipitation along with sulfides, adsorption and removal. The traditional method applied for treatment and recovery of heavy metal ions from acid mine drainage, has been lime neutralization to precipitate the metal hydroxide. The precipitated hydroxides are difficult to filter. The metal hydroxides are not stable chemically; they are contained and will have to be disposed in the future. The method based on precipitation of sulfides, which allows to utilize the sulfides as a solid agent and produces metal sulfides that are chemically more stable in comparison with hydroxides. The metal sulfides are difficult to filter from solutions. Moreover, under certain circumstances, when there is an excess of sodium sulfide used as a precipitating agent, a hazardous gas - H₂S is often produced during the precipitation. In order to minimize possible risks and ensure operation safety, a closed reactor vessel with secure venting would be required. For the processes used in earlier technologies, the consumption of sulfides and other sulfur-containing compounds is excessively high due to the oxygen-sensitive nature of sulfides. Metal precipitates including sulfur-containing organic compounds are easier to filter than inorganic sulfides, that have promoted their widely use for wastewater treatment in recent times. However, if a waste stream contains a great amount of metal that has to be treated, use of such organic precipitates is sometimes not economically feasible.

In general, the technologies of recent times are disadvantageous because they are non-selective, they involve bulk precipitation processes and require high content of ferrous ion at a high pH and at high temperatures (about 60°-70° C). They require also excessively long aging times to achieve successful oxidation and formation of ferrite. Another substantial disadvantage of coprecipitation process employed in the technologies of the earlier times, is an excessively extended aging time, two or three days, as a rule, required for ferrite to acquire magnetic properties. Only after that the magnetic ferrite particles can be separated from non-magnetic ferrite particles by a magnetic separator.

It is obvious that it would be necessary to improve the processes for the removal of metals from contaminated water. In addition to metals, it is also desirable to remove their oxides or salts from the wastewaters. It can be seen that it would be useful to develop such process to treat contaminated waters (for example, acid mine drainage and mineral industries wastewaters) in order to receive a final product or products which can be not only easily removed from bulk solutions, but also effectively recovered, which provide a treated water which meets the quality standards for its discharge into the environment. Consequently, this invention enables to overcome not even one but more problems in so far as it eliminates the disadvantages of the processes used in earlier times.

The process disclosed in this invention, allows for selectively removal and recovery by oxidation most of the metals which are present in contaminated water. Anyone used in practice the process of this invention, can both oxidize most of the metals contained in contaminated water, and also maintain a positive potential for each metal as long as the contaminated water has an oxidation-reduction potential.

One of the major methods of removal suspended solids from liquid streams has always been filtration used to treat liquid and wastewaters. In particular, in wastewater treatment applications the presence of suspended solids is frequently a major technological problem. To reduce concentration and/or remove suspended solids from fluid streams filtration has mostly been employed. In such applications, both down flow and up flow sand filters as well as dual or mixed media filters have been widely applied and have been exhibited as very cost effective and efficient in use. However, the practice has shown that sand and mixed media filters work effectively for removal of suspended solids only under limited solids loading conditions. Solids concentration in the liquid stream going through the filter must be below about 100-200 milligrams/liter. If suspended solids concentration is above this level, the filtration bed is susceptible to clogging and pressure drop across the bed.

For removal of such contaminants as toxic organic chemical species, from liquid it has been common to use sorbent beds, through which the liquid stream containing adsorbable contaminants is passed. In particular, both synthetic and carbon resins have been widely employed as an adsorbent medium due to its high selectivity for many organic and inorganic contaminants contained in liquid streams. Both of these resins are available in such forms, which can be packed in columns so that the water can be passed through this medium without any need for subsequent solid-liquid separation steps. However, granular carbon cannot be regenerated, and synthetic resins are often contaminated by particulate matter. Such granules used for wastewater treatment, are usually quite large in size, and a period of time required to hold liquid in adsorbent bed takes 30-60 min. In order to avoid clogging of the sorbent bed it is necessary to execute prior filtration of the liquid subject to treatment. In addition to that, usage rate of the sorbent has to be substantial before on-site regeneration justifies economically the sorbent costs. For example, carbon usage rate must be more that 500 pounds per day before on-site regeneration justifies the carbon sorbent costs reasonable on a quantitative basis.

In order to handle the problem associated with prior filtration up-stream of the sorbent bed, the methods used in earlier times have proposed to operate the adsorbent bed in a mode of an expanded or fluidizes bed. Such operating mode is able to treat liquids with low content of the solids, for example, less than 120 milligrams of suspended solids per liter, while liquids with higher solids content will still require filtration. For the treatment of even low solids content liquids when it is possible to operate the expanded or fluidized bed, liquid stream flowing out of the sorbent bed, will still contain substantial levels of suspended solids.

The technologies used in earlier times proposed to employ powdered adsorbents for removal of adsorbable contaminants in wastewater treatment applying an active sludge process. While doing this, the powdered sorbent, carbon, for example, was added directly to the aeration tank with wastewaters. In such cases, powdered carbon or other sorbent was mixed with biologically active sludge solids, and, a result of this, it was necessary to dewater and regenerate the sorbent together with these solids, which is unprofitable from the standpoint of operating system complexity and the treatment cost. Moreover, application of such method results only in slight polishing, i.e. removal of adsorbable contaminants from the liquid treated.

In compliance with the above, the major objective of the invention is to provide an improved, integrated process for treatment of the liquids containing suspended solids and adsorbable contaminants, using an absorbent particulate catalyst impregnated sorbent. Other objectives and advantages of the present invention will be apparent from the following disclosure and the claims appended herewith.

Another aspect of the earlier technologies associated with the present invention is the structural formation. A microfilter has usually a microporous structure composed of either crystalline aluminosilicate, chemically similar to clays and feldspars belonging to a class of materials known as zeolites, or crystalline aluminophosphates, derived from mixtures containing an organic amine or quatemaly ammonium salt, or crystalline silicoaluminophosphates which are obtained by hydrothermal crystallization from a reaction mixture including chemically active sources of silica, alumina and phosphate. Microfilters enjoy wide application. They can be used to dry gases and liquids, for selective molecular separation based on size and polar properties; as ion-exchangers, as catalysts in cracking, hydrocracking, disproportionation, alkylation, oxidation, isomerization and chemical conversion of oxygenates to hydrocarbons, particularly alcohol and di-alkyl ether to olefins; as chemical carriers; in gas chromatography and in the petroleum industry to remove normal paraffins from distillates.

Microfilters are obtained by a chemical reacting in which several chemical components enter. One of the components used in the reaction process is a template though more than one template can participate in this reaction. The template has to be present in the reaction to form channels in the structure. Such structure is called a microporous structure.When the template is removed, an open mocroporous structure is left, in which chemical compositions can enter as long as they are small enough to be fit inside the channels. This microfilter sieves and screen out large molecules from those that are able to enter a molecular pore structure.

Microfilters are particular suitable for use as catalysts. Being catalysts they have catalytic sites within their microporous structure. Once the template is removed, a stream of chemical reagents small enough to enter into the channels, makes contact with a catalytic site, a reaction takes place with formation of a product which can leave the microfilter through any channels or pores as long as the product is not too large to pass through the structure. For many catalytic microfilters the pore sizes range from about 2 to 10 angstroms.

Though particles of finished sorbent microfilter are generally harder than particles of the components, still they can be damaged due to physical stresses associated with collision, during the manufacture of the finished sorbent particles in a process of chemical reaction. Such damage results in physical wear down or break apart (attrition) the sorbent particles until they become too small to be be reused efficiently. The attrited particles are then discarded as waste from the system in which they were used. In the manufacture of finished sorbent particles there may also be produced the particles which are too small for their subsequent use in reaction system. For example, because of misoperation of equipment or transient operation at the beginning or end of one operation cycle on manufacturing a batch of sorbent, clumps or sheets of the microfilter or composite material may form on the walls or floors of equipment. It is necessary to discard clumps as losses obtained during the process of sorbent manufacturing. From an economic standpoint the discarding of sorbent attrition particles or undersized clumps remains a pressing problem. Therefore, methods for effectively recovering and reusing of these sorbent attrition particles and clumps are extremely desired.

In order to limit losses of attrition particles containing microfilters and/or clumps during manufacture or during use, this invention proposes to use a particulate catalyst impregnated sorbent, introduced into a carbon structure of defined size or other composition, calcinated with a binder.

An additional fluid stream having undesirable impurities or contaminants that need to be removed, is a hydrocarbon fluid stream or a carbonaceous liquid feed stream. The contaminants include such metals as vanadium, nickel, iron, as well as compounds of nitrogen, sulfur and aromatics.

Such process proposed for removal of the above mentioned contaminants from a hydrocarbon fluid stream is called hydrodesulfurization. While hydrodesulfurization of a hydrocarbon fluid stream can remove these undesirable compounds, it can also result in the saturation of most, if not all, of the olefins contained in the gasoline. Presence of olefins greatly affects the octane number (both the research and motor octane number). These olefins are saturated, in part, due to hydrodesulfurization conditions required to remove thiophenic compounds, such as, for example, thiophene, benzothiophene, alkyl thiophene, alkylbenzothiophenes and alkyl dibenzothiophenes, which are considered to be the most difficult compounds to remove. In addition, the hydrodesulfurization conditions required to remove thiophenic compounds can also result in saturation of aromatics.

Considering the problem associated with the ever-increasing need to produce cleaner automobile fuel, various processes have been proposed to achieve this goal and obtain its industry compliance with the Federal mandates. Yet there has been no success achieved in providing efficient and economically feasible process for the reduction of the contaminant levels in cracked-gasoline, diesel fuels, kerosene, naphtha, vacuum distillate, fuel oils and other hydrocarbon fluid products. So as of today, there is still a need for an improved process.

Consequently there is a need for such a process wherein sulfur can be removed without hydrogenation of aromatics. If it is achieved the process for the treatment of hydrocarbon fluid streams would become more economical.

It is therefore an objective of this invention to provide a method for the removal of sulfur-containing compounds from cracked-gasoline, diesel fuels, kerosene, naphtha, vacuum distillates, fuel oils and other hydrocarbon fluid products, which minimizes saturation of olefins and aromatics therein.

The other aspects, objectives and some of advantages of the present invention will be apparent from the description given below, as well as from the claims appended herewith.

### Summary of the Invention

This invention not only handles the above problems but also improves the technology by providing a more advanced method of separation and removal of target elements and compounds, and provides an innovated sorbent impregnated with catalyst having a particulate structure. The process also uses oxidation; fractional control for the fluid feeds or feed streams, continuous adsorption used to improve process efficiency in the removal of impurities and contaminants from liquid streams. These progressive advances related to catalyst/sorbent construction and adsorption art are aimed to increase the yield of adsorption treated product, improve its quality and reduce the utilities (low temperature and pressure) that are required to process a given liquid stream due to the use of the best regeneration processes and apparatus. An additional advantage, which needs to be mentioned, is that application of this process is not limited solely with hydrocarbons or aqueous based liquids, but can be used also for great variety of different liquid streams that were not amendable to prior processes.

The novel approach and the description of the process disclosed herein, refer to a technological system used in treating liquid streams to remove impurities and contaminants from them. In doing this, the oxidized impurities and contaminants have a greater selectivity for the catalyst than the other compounds present in the liquid.

It is understood from the foregoing that it would be advantageous to improve the processes for the removal of metals from contaminated water. It would also desirable to selectively remove metals, their oxides or salts from the wastewaters. It can also be understood that it would be advantageous to develop a technological process to treat such contaminated waters as, for example, acid mine drainage and mineral industries wastewaters in order to provide a final product or products which can be easily removed from solutions and efficiently recovered. Such product or products could be of great demand and/or have immediate applications. As a result of this process applied the treated water would meet quality standards and could be discharged into the environment.

While applying the proposed technological process described herein, these and some other objectives are achieved, that provides a method for separating hydrocarbon liquids and removing them from water and other polar solutions. In particular, the present invention helps to successfully overcome the problems pertaining to the out-of-date methods used to remove petroleum-based products from aqueous solutions. The materials used in this process may be recycled repeatedly contributing to reduce the costs and the amount of material necessary for the effective separation of the contaminating liquids. Moreover, the hydrocarbon liquid recovered by use of this method, may be processed and employed the way it has been originally intended, in order to handle that problem associated with disposal of wastes into the environment.

It is also an object of this invention to separate and remove the target elements and compounds (impurities and contaminants) by oxidizing the target element or compound. The oxidizing gas in a form of micron size bubbles is passed through the fluid stream or some other feed stream. The micron size bubbles of oxidizing gas are dispersed into the fluid stream containing the target elements or compounds, which are efficiently oxidized into oxides. Due to the micron size of the bubbles the surface area of the oxidizing gas is greatly increased, as a result of which the efficiency of the oxidation reaction is also greatly increased.

The major objective of this process is the oxidation of the target elements or compounds (impurities or contaminants). The second objective is to conduct simultaneous separation of metals, sulfur compounds, nitrogen containing and aromatic hydrocarbons from the fluid streams in order to obtain the desired combination of residual aromatics and low sulfur and nitrogen content. During the whole process the operating conditions are relatively mild, commencing from separation till removal. The pressure is near ambient and temperature is less than 80-90° C during the whole process.

Then a liquid stream enters a reactor, where a fixed bed of a particulate catalyst impregnated sorbent is placed, and contacts the porous sorbent particulates. The overall residence time therewith is sufficient for the target element or compound (impurity or contaminant) to be absorbed by the sorbent and create a slight covalent bonding with the catalyst which separates and removes the target elements or compounds from the liquid stream. It results in producing a purified liquid stream having a reduced concentration of impurities or contamination as well as the remained catalyst impregnated sorbent which is chemically bonded to an impurity. Normally the purified liquid stream leaves the reactor as an already treated product having the required characteristics. For example, the processed diesel feedstock as a treated product may be expected to be clear, colorless, free from any objectionable odors, have a very low ppm of sulfur compounds, such as mercaptans, thiophenes, benzothiophenes and dibenzothiophenes, reduced content of nitrogen compounds, lower aromatics and poly nuclear aromatics, smaller percentage of metals (vanadium, nickel and iron), an improved cetane index.

Another important feature of this invention is that the catalyst impregnated sorbent used in the reactor has a composition that comprises binding together a catalyst within a sorbent particle. The sorbent for the catalyst can be carbon, silica or an alumuna, a zeolite, a perlite form, or any other structurally sound, porous sorbent. The catalyst can be a metal, alkali, or alkali earth metal, metal oxide, a bimetallic combination (combination of metals). For example, a sorbent comprising of a zeolite, which a special type of a catalyc metal, such as silver, is supported on, due to ion exchange exhibits excellent absorptivity for sulfur compounds at normal temperatures or the ones close to normal.

After the separation of the target element or compound, the sorbent can be washed and reactivated by means of flushing of a polar organic or inorganic solvent. As a result of such flushing or washing of the catalyst impregnated sorbent, any residue of the target elements or compounds can be removed. Drying the particulate catalyst impregnated sorbent with heat or hot nitrogen regenerates the absorbance ability of this sorbent and prepares it for reuse. The organic or inorganic polar solvent along with the target element (or compound) can be separated by distillation.

The present invention is very helpful not only for separation and removal of liquid hydrocarbons, such as oil, from aqueous solutions, but it is applicable also to the separation of any target elements or compounds ( impurity or contamination) from hydrocarbon liquids. Examples of hydrocarbon liquids which may be separated from the target elements or compounds with the use of this invention include but are not limited to the following list: gasoline, diesel, naphtha, kerosene, vacuum distillate, fuel oil, crude oil, paraffinic oil, xylenes, toluene, styrene, alkylbenzenes, naphthas, liquid organic polymers, vegetable oils and the like. Examples of the target elements or compounds present within these hydrocarbon liquids can include, but are not limited to the following metals (vanadium, nickel, iron), nitrogen compounds, sulfur compounds (mercaptans, thiophenes, benzothiophenes, dibenzothiophenes), aromatics, poly nuclear aromatics and the like.

The process design can be modified to make it suitable for a variety of hydrocarbon feed streams; nevertheless, the boling range of the feed will determine the suitability of the specific solvent or solvent combination to a large extent, because of the need to recover the solvent for recycle. The present invention is distinguished by several process design variations available and economic optimizations developed. For example, depending upon the requirements to the final product and quality of the feedstock, a lighter fraction as well as larger amount of thiophenes and aromatic compounds may be removed at the first oxidation step, leaving a second fraction for the following oxidation and separation. The design optimization is a trade-off between the slower space velocity within the reactors after oxidation and the cost of the two fraction separation, an increased feed stream flow including recovery of the solvent and recycle.

In compliance with the present invention, water or any other polar aqueous fluid stream, hydrocarbons, any carbonaceous liquid stream, containing heavy metals, sulfur compounds, impurities or contaminants can be treated to reduce greatly the concentration of the above elements or compounds by oxidizing it first, and the following contacting the impurity latent water with the particulate catalyst impregnated sorbent. For the particulate catalyst impregnated sorbent that can be provided in accordance with this invention, it is preferable to use the methods described herein below. The resulting particulate catalyst impregnated sorbent is especially effective and useful for removal of oxidized target elements and compounds from water or polar aqueous streams. In this process the sorbent contacts the fluid stream or feed stream containing the impurities under the conditions normally involving the application of the fixed bed adsorption technique. Using such structures under these conditions results in unexpectedly high removal rate of the oxidized target elements and compounds from fluid streams or feed streams, according to this invention.

The following Detailed Description discloses in details some of the embodiments of the methods used for the preparation of the particulate catalyst impregnated sorbent as well as the methods of using the medium sorbent to separate and remove the target elements or contaminants in accordance with this invention. The actual practice has shown that application of the present invention can have dramatic and sometimes unpredictable effects on industry comparing to the prior technologies mentioned above. Implementation of this invention can enhance economical impact of the process while this method remains very simple in comparison to the other alternative methods and technological processes.

### Detailed Description of the Invention

The process invented can be applied for removal of any target element or compound that can be oxidized from most of polar environment, water, other aqueous liquids, hydrocarbons, hydrocarbon by-products or liquid carbonaceous substances. Use of carbon, zeolite, perlite, or some other structurally sound porous sorbent in this process allows to run oxidation, separation, removal, recovery and subsequent treatment of the separated target element or compounds very advantageously, as well as the regeneration of the particulate catalyst impregnated sorbent. Therefore, this invention can be applicable for the processes of separation and purification in manufacturing. The major intent of this technology patent is to show utility, novelty and efficiency of using both the whole process system and combination of or partial use of the subsystems and its separate components.

In the beginning of this section a brief summary of the sorbent composition and its making thereof will be introduced. The more detailed description will be disclosed in a separate section. Then, it is followed by the process description, explanation to the process design and notes on specific differentiations associated with water of hydrocarbon treatment.

Such adsorption oxidation and the sorbent absorption process have an advantage that they can be conducted at ambient temperatures, and in order to accomplish its task, i.e. remove the target elements and compounds, do not require extraordinary refrigeration or heating.

Liquid phase absorption differs from gas phase adsorption with the rate of diffusion which in the liquid phase runs at least two orders of magnitude slower than in the gas phase. Diffusion of components in the liquid phase requires additional residence time. Impurities are absorbed by the solid absorbent because the attraction of the absorbent surface is stronger than the attractive force that keeps the impurities in the surrounding fluid. The liquid absorption can be considered as a type of adhesion that in a thermodynamic sense takes place in the internal surface of a solid body having absorbable impurities in the liquid medium. This results in a relatively increased concentration of absorbable impurities entering the absorbent particle pores and being moved to the catalyst center by either the physical absorption due to electronegative attraction or Van der Waal's forces, or chemical absorption occurred due to the chemical or valence forces.

To take a decision and make the election to remove more or less target elements and compounds in the separation and removal oxidation/absorption sections of the process - is an economic issue and depends upon the relative cost of these two operations. The absorbers can be places on a single bed, on several separate beds or in several reactors (there are a lot of different variations). It is necessary to reach a compromise which is a trade-off between the speed of flow or space velocity and the costs of the two separation steps, including the solvent recovery and recycle steps. Depending on the economic requirements these process steps can be performed equally well as batch or continuous flow operations. The absorbers can be regenerated by circulating through their beds an amount of a polar organic or inorganic solvent at the temperatures of between 30° C up to 90° C, and recycling the effluent containing the target elements and compounds, back to the solvent separation section and distillation section, after cooling.

The sorbent composition of the present invention which can be efficiently used in the separation and removal of the target elements and compounds in this process, can be prepared by the methods as follows:
mixing the starting components preferably comprising of: a zeolite or expanded perlite and
alumina, or a carbon particulate structure so that to form a mixture looking like any of the following consistency: wet mix, dough, paste, slurry and the like;
particulating, preferably spray-drying, the mixture to form particulates, granules, spheres, micro-spheres and the like, but preferably micro-sphere particulates;
drying particulates under the drying conditions as disclosed herein in order to form dried particulates;
calcining the dried particulates under the calcining conditions as disclosed herein in order to form calcined particulates;
incorporating, preferably impregnating the calcined particulate with a catalyst component in order to obtain a particulate impregnated catalyst within the support component;
drying the activated particulate under the drying conditions as disclosed herein to obtain a dried particulate impregnated with the catalyst sorbent;
calcining the dried activated particulate under the calcining conditions as disclosed herein in order to form a calcined particulate impregnated with the catalyst sorbent;
reducing the calcined activated particulate with a suitable reducing agent so as to obtain in a result a sorbent composition containing a reduced-valence catalyst component, wherein the amount of the reduced-valence catalyst component is sufficient for the effective removal of specified target elements or compounds from a hydrocarbon-containing fluid, water and any polar aqueous fluid stream, or from any carbonaceous liquid streams when they contact a sorbent composition in accordance with the process(es) of the present invention.
Optimum adsorbent size and residence time for its particulate is a matter for experimental study under actual process conditions.

Though the disclosure is not limited to a description of a particular mechanism, it appears that the target elements and compounds undergo a catalytic conversion on the sorbent during oxidation resulting in the formation of substances having an increased molecular weight. For example, mercaptanes are oxidized to sulfides and/or polysulfides. These sulfur compounds having higher molecular weight are then absorbed by these particulate catalyst impregnated sorbent. Then the physical absorption of the sulfur compounds on these sorbents is increased due to their higher molecular weight. The sorbents being the subject of research for the present invention have received a term "particulate catalyst impregnated sorbent, in so far as the absorption of the sulfur compounds on the particulate catalyst impregnated sorbent of the present invention is a two stage process, i.e. at the first stage the catalytic oxidation conversion of sulfur contaminated compounds takes place, and it is followed by the physical absorption of the catalytically converted products.

The process for separation and removal of target elements and compounds consists of the following stages:
Fractionation: different species of target elements and compounds may reside in the host media in different concentrations within different boiling point fractions. This may be an integral function to the efficiency of the separation and removal steps.
Oxidation: the target elements or compounds are best selected for the separation from the host media by their oxidation. The higher efficiency of oxidation is, the lower of the level of target elements and compounds remains in the host media.
Separation: the host media containing the target elements or compounds then enters the reactor which contains a particulate catalyst impregnated sorbent as described above. The present sorbent absorbs the target elements or compounds by the enhanced selectivity of the sorbent for the target elements and compounds, separating them whereby from the host media.
Removal: the target elements and compounds are removed from the particulate catalyst impregnated sorbent by the washing of the sorbent with a polar organic or inorganic solvent. The reactors are washed or flushed with the solvent until the desired level of the target elements or compounds are eliminated from the sorbent.
Regeneration: then the particulate catalyst impregnated sorbent is regenerated by the drying it with heat or hot nitrogen. The gaseous solvent is vacuum pumped out from the reactors, cooled and condensed. After that the solvent is returned back to the solvent holding tank for reuse. If hot nitrogen is used for these purposes, it is collected and reused.
Recycle: the target elements and compounds washed with the solvent are separated from the solvent by distillation. The separated solvent is then returned back into the solvent storage tank for reuse.
Refinement: the separated target elements and compounds can be reintroduced into the process system at much higher concentration in order to be refined to a lower volume by separating any, and theoretically all, of the remaining host media. If the host media is a hydrocarbon feed stream or fuel, the target elements or compounds can be used as a fuel at any of the steps of the process proposed by the invention.

In accordance with the present invention the separation and removal steps are carried out under a certain number of conditions as follows: (1) total pressure must remain constant during the whole process and be at the level of the ambient pressure or slightly higher; (2) the temperature must be maintained at a low operating level of about 70-80° C during oxidizing and separating, and from 40° up to 140° C during removal, regeneration and recycle steps, depending upon the solvent or solvents used; (3) hourly space velocity must be determined by the desired level of the target elements and compounds which for the minimum flow is to be about 2.0 to 3.0, and up to 10.0 to 15.0 for the maximum flows. These conditions are such that the composition of the particulate catalyst impregnated sorbent can separate and remove the target elements and compounds from the host media.

The passage of the influent liquid containing suspended solids and adsorbable contaminants, through the fixed sorbent bed is continued until the sorbent bed is at least partially loaded with deposited solids and absorbed contaminants. After that, the deposited solids and the sorbent loaded with the absorbate are washed or flushed with a polar solvent for regeneration of the latter, and only after that the absorption operation and normal on-stream separation are reinitiated again.

The enhanced adsorption oxidation is accompanied by release of heat, because the adsorbate molecules are stabilized on the adsorbent surface. For limited quantities of impurities containing in the fresh feed, temperature increase of the fluid is limited by the amount of adsorbable impurities which are normally present, i.e. the heat content of the other liquid components offsets the heat release due to the impurities which will cause just a small temperature increase in the process. During the process the following operating conditions are maintained: temperature between about 20° up to 90° C, pressure is ambient and increased only by the pump pressure. For example, the partition coefficient for thiophene-dioxides between the hydrocarbon and sorbent phases doubles its value at 70° C comparing to 20°C. The optimum oxidation temperature depends upon the adsorbent composition, molecular composition of the thiophene and thiophene oxides, molecular weight distribution, the feed hydrocarbon composition and to a great extent upon the aromatics content and composition. That is why it is necessary to optimize the extraction processes for each individual feedstock basing on experimental oxidation and separation data. The oxidation can be performed in a packed or trayed column with regular mixing, induced pulsation or without it. While doing this, any suitable single or multi-stage fixed bed can be used. Other values outside these ranges are possible as well.

The regeneration of the sorbent fixed bed is completed with draining of the column and passing a heated gas, preferably nitrogen, upward through the packed sorbent bed so that the solvent could be removed from the sorbent. The temperature of the gas applied to cause such regeneration may vary from about 120° C up to 140° C, and its flow rate of about 15 ml/min while an outlet pressure gauge reading of about 8 psi.

The evaporated solvent could be channeled to or vacuum pumped into a cooling column, recondensed, and collected in a holding tank for reuse.

An alternative method for regeneration of the sorbent fixed bed is to use a secondary solvent with a high dissolution coefficient and low vapor point in order to dissolve the first solvent. Two solvent mixture is then directed to a distillation unit for separation, where both of them are recycled for reuse. Then the reactor columns are heated up to 40° C with the help of heating element or by means of an insulated surface blanket. The evaporated secondary solvent could be channeled out or vacuum pumped out into a cooling column, recondensed and collected in a holding tank for reuse.

The method applied in the present invention envisages the creation of such fixed bed column reactors which are packed with the material tailored to the above mentioned conditions, and operate in parallel, such that when one packed vessel reaches the limit of its absorption capacity, it can be taken off-line for regeneration while the second one is brought on-line.

To design such vessels with consideration for their size and dimensions the traditional engineering principles may be used. Size and dimensions of these vessels packed with the particulate catalyst impregnated sorbent have to match the flow rate in the process system involved which, in its turn has to achieve proper residence time required for treatment. Because of high porosity of the sorbents, their beds may be comparatively tall.

The separation reactor column can be operated within a wide range of temperatures, different solvent compositions and flows of different space velocities, therefore it can be accommodated to various feed compositions of the stock as well as product specifications.

The process can be carried out both in a single reaction zone and number of reaction zones, arranged in series or in parallel, and have significant technological advances while using adsorption over the system described in the US Pat. # 5,730,860.

The distillation column can be designed and operated in such a way, that the solvent recovered at the bottom of the column meets recycle solvent specifications. The solvent obtained does not need to be absolutely pure but may contain small amounts or trace amounts of some other compounds.

Note: In a zeolite column some amount of the thermal energy from the heated air is absorbed by the silane-zeolite bonds, regenerating thereby their strength for restablization of the bed. The packed bed is cooled, filled with the ambient water and put back on a line for its subsequent use while the capacity of its companion is already reached.

For cases where the quality of the feedstock requires regeneration that results in some build-up of residual hydrocarbons, a small side stream taken from the recycle solvent stream may be used as fuel for this process.

Thus, a method for enhanced adsorption oxidation, subsequent separation and removal of target elements and compounds with the use of particulate catalyst impregnated sorbents has been discovered.

### Notes on Oxidation

The oxidation step of the technological method disclosed herein involves the induction of an oxidizing gas. In this process air, ozone, hydrogen peroxide or some other gases known to be utilizes in oxidation techniques. The oxidizing gas as disclosed in the detailed description of this invention, is air, however, if desired, some other oxidizing gases may be utilized in the practice of the invention.

The combined feed mixture is then heated to the desired reaction temperature in the fixed bed reactor column. For this step, the oxidation reactor can comprise of a packed column, one or more reactors in series, or a similar configuration that provides adequate surface contact with the oxidizing gas, minimum back-mixing and 15-30 minutes of the residence time required to reach the desired oxidation conversion.

Bubbles of the air or oxidizing gas are dispersed in the oxidation column, then the target elements and compounds contained in the feed stream, are immediately oxidized with formation of mono- or dioxides. The micron size of the bubbles of the air or oxidizing gas substantially increases the surface area of the oxidizing gas phases in the feed stream, greatly increasing thereby the efficiency of the oxidizing reaction. The oxidant - to - target element ratio can vary depending on the nature and chemical activity of the compounds, the product specification, the operating temperature and the catalyst selected. The reaction mixture may be in one or two liquid phases according to the amount and type of oxidant used. The reaction temperature in the oxidation process must be maintained at the level of 80° C, converting the target elements or compounds quantitatively to the oxidized compounds. Upon completion of the oxidation reaction the feed stream continues to move to a fixed bed of the reactor column for adsorption of the oxidized target elements or compounds.

All of the air or oxidizing gas is expected to be completely consumed by the oxidizing reaction. If not, excess air or oxidizing gas may be either reinitiated into the oxidation column or vented. It is necessary to indicate that the particulate catalyst sorbents proposed by this invention are especially suitable for the oxidation reactions of organic molecules due to their excellent adsorption qualities that gives a possibility to maintain an adequate retention time for the oxidation reaction. Using the particulate catalyst sorbents of this invention, the reaction can be conducted also in the liquid phase by passing the mixture of the oxidized target elements or compounds through the particulate catalyst sorbents in a reactor with the fixed bed.

### Notes on Solvent used in this invention

Solvent mixtures utilized in this invention should be: easy to recover, able to recycle, chemically stable, of low cost, of low toxicity and of high polarity. Solvent mixtures should also be inert to reactions with the liquid feed streams.

For the process of this invention the following organic and inorganic solvents are suitable: aromatics, halogenated aromatics, organo-chlorinated compounds, ketones and alcohols, such as toluene, dichlorobenzene, dichloromethane, dichloroethane, acetone, ethanol, methanol and some other.

At the stage of solvent separation or extraction the content of solvent is approximately from 80 to 90% and the content of target elements and compounds is about 10 to 20%. The solvent may be removed from the target elements and compounds by distillation. The design of the process can be chosen basing on the economic requirements. It depends upon such indicators as the specification of the original feedstock, design capacity of the plant, selection of the solvent, boiling points as well as differences in phase density, which will be obvious to the plant workers sufficiently experienced in the art.

An important advantage for the solvent is also its compatibility with the oxidation reaction. In addition to that, if necessary, one or several of the solvent components in this process can participate as intermediate reactants in the oxidation reaction. An example of such a compound is acetic acid and its homologues, which form peroxy-acid intermediate oxidants with hydrogen peroxide. High extraction selectivity, strength of polarity, dissolution coefficients, safety in application, process compatibility as well as low cost are the basic indicators which dominate the solvent selection for industrial application.

Several variations for the process design can be made, as well as economic optimizations for hydrocarbon feed stocks may be carried out, that is readily apparent to the process designer experienced in the art. For example, depending upon the final product specification and quality of the feedstock, it is possible to remove lighter fractions at the first separation step, while leaving the rest of them to be oxidized and separated downstream. The design optimization can be achieved by a trade-off between the speed of flow or hourly space velocity and the costs for two separations including the solvent recovery and recycle steps.

The process design can be modified to accommodate a variety of liquid streams of the feedstock. Nevertheless, the boiling range of the feed will considerably determine the suitability of a specific solvent combination because of the need to recover the solvent for recycle. Another example of the process optimization is a possibility to conduct both separations together for the solvent recovery. Doing this significantly reduces the process complexity, in so far as several pieces of equipment have to be removed.

After recovery of the solvent, according to the character of the hydrocarbon feedstock, the extract recovered will consist of about 10 to 25% sulfur-containing compounds and 10-30% aliphatic compounds, with the balance comprising aromatic compounds.

### Notes on water treatment

For the most of the cases specified by this invention, wherein the water contains solids and adsorbable impurities, for example, municipal water purification or the treatment of industrial wastewaters, it is more preferable to use carbon as a particulate adsorbent, which may be in the form of powder, particulate, or micro-sphere. In other water treatment applications the particulate adsorbent may comprise of a zeolite, an expanded perlite or other structurally sound porous sorbents.

The waters treated using the process of the present invention are usually contaminated with iron metal, iron oxides, and/or iron in the form of ferrous and/or ferric salts. In addition to that, such water may contain the non-ferrous and non-ferric metals, metal oxides and/or metal salts of copper, zinc, aluminum, manganese, silver, lead, cadmium, gold, nickel, arsenic and the like as well as the lanthanide and actinide metals. Thus, as disclosed herein, the oxidation of metals in any of the stages of the process involves the separation of the metal and its oxides and salts. In compliance with the invention, the contaminated water must contain metals, which an oxide can be produced from. Therefore, the contaminated water must contain any combination of Zn, Mn, Mg, Cu, Ni, Cd, Pb and the like and/or their oxides and salts so that the above-mentioned metal can be oxidized and separated. Generally, in the wastewater and industrial sewage water treatment, such metals are called "heavy metals". These metals belong to the transition group of metals; they are toxic and can cause serious damage for the environment if discarded into rivers, lakes or other natural water resources. However, the metal that may be recovered from the host media by the separation are not limited only to the group of "heavy metals".

In the process of metal separation stage (a), at least one oxidizing agent is added to the contaminated water in order to increase the oxidation-reduction potential of the water and make it more positive for conversion of the metal. For example, iron present in the water, will convert to the ferric ion and it will precipitate from the water in this form. The metal precipitate is removed from the water during separation by the sorbent. In some instances it may be sometimes required to selectively remove from the contaminated waters and recover such metals, which have value and can be sold for remelting.

The support material used to produce the adsorbent for water treatment typically ranges in its size from a micron or a few tenth of a millimeter in diameter up to several millimeters in diameter. Larger sorbent particles have the advantage that they provide less resistance to water flow and are subjected to less clogging. Yet, their disadvantage is that they have less surface area per unit volume, so less coating can be packed in the column of given size. An additional limitation of some large sorbents in the context of the present invention lies in the fact that the motive force needed to fluidize a bed increases as the size of the sorbent particles increase (for a given medium density). Depending on the specific support material, the increasing shear forces for larger particles may cause damages of the surface coating.

The process of this invention is applicable for the removal of any hydrocarbon liquids basically from a polar environment or water. Use of the particulate catalyst impregnated sorbent as disclosed above, successfully allows the recovery and subsequent treatment of the separated hydrocarbon liquid as well as the regeneration of the particulate catalyst impregnated sorbent. Therefore, the present invention will find wide application for separation and purification both in manufacturing and for laboratory purposes. Yet, based on the lack of the similar alternative methods, this invention is expected to be used for such important field as the removal of contaminating hydrocarbons from bodies of water. However, areas of its application are not limited only with the above.

The flow rate of contaminated water through a catalytic zeolite sorbent may be within the ranges of 0.05 to about 0.2 bed volumes per minute. But the more preferable flow rate of the contaminated water is about 0.1 bed volumes per minute that is comparable with the normal on-line cleanup rates.

Empirical data based upon the BTEX loading of contaminated water and the rate of the flow passing through the catalytic zeolite sorbent along with simple experiments performed to determine the length of time required to use completely the capacity of a particular catalyst zeolite sorbent bed before breakthrough of the benzene or alkyl benzenes. It is also possible to conduct analysis of the effluent which may help in arrangement of the automatic control for the process.

### Notes on hydrocarbon impurity separation

The method of improving the quality of hydrocarbons disclosed in the present invention, may be used as either the separate process for treating the hydrocarbons or in combination with the existing hydrotreating techniques. In particular, while using the method of this invention after hydrotreating, the aromatic compounds which remain after the hydrotreating process are removed, increasing thereby the cetane rating of the diesel fuel.

For example, impurities contained in the hydrocarbon feedstock may include heteroatom compounds, such as those involving nitrogen, oxygen and sulfur. Sulfur-containing compounds include for example, aliphatic, naphthenic and aromatic mercaptans, sulfides (for example, hydrogen sulfide, carbonyl sulfide), di- (carbon disulfide) and polysulfides, thiophenes and their higher homologs and analogs as well as benzothiophenes and dibenzothiophenes. Other impurities may consist of nitrogen containing compounds. The hydrocarbon feedstock is characterized with the fact that heteroatom impurities have a polar atom, which facilitates preferential adsorption.

Hydrocarbon mixtures, feed stock and feed streams, by-products, heavy hydrocarbons and carbonaceous liquid feeds suitable for use in this invention, but not limited to, could be defined by the terms as follows: "gasoline", "cracked gasoline", diesel fuel", "heavy bottoms". The term "gasoline" is defined as a mixture of hydrocarbons boiling out at the temperature range of from about 30° C to about 205° C, or any fracture thereof. Examples of such gasoline include but are not limited to, hydrocarbon streams in refineries as follows: naphtha (straight-run naphtha as well), coker naphtha, catalytic gasoline, visbreaker naphtha, alkylate, isomerizate, reformate, and the like, as well as combination thereof. The term "cracked gasoline" specifies a mixture of hydrocarbons boiling out at the temperature range of from about 38° C up to about 205° C, and any fraction thereof. These are the products from either thermal or catalytic processes, the result of which larger hydrocarbon molecules crack into smaller molecules. Examples of suitable thermal processes include but are not limited to the following processes: coking, thermal cracking, visbreaking and the like and combinations thereof. Examples of suitable catalytic cracking processes include but are not limited to as follows: fluid catalytic cracking, heavy oil cracking, and the like as well as combinations thereof. Thus, examples of cracked gasoline include, but are not limited to, coker gasoline, thermally cracked gasoline, visbreaker gasoline, fluid catalytically cracked gasoline, heavy oil cracked gasoline, and the like as well as combinations thereof. The term "diesel fuel" mentioned herein, means a liquid composed of a mixture of hydrocarbons boiling out at the temperature range of from about 150° C to approximately 370° C or any fraction thereof. Such hydrocarbon streams include light cycle oil, kerosene, jet fuel, straight-run diesel and, finally, hydrotreated diesel. The term "heavy bottoms" employed herein is taken to designate a fluid composed of a mixture of hydrocarbons boiling out at the temperature range of from about 275° C and higher, or any fraction thereof. These hydrocarbon streams include fuel oils, bunker C, bitumen, mazoot and residuals.

In some of the cases the cracked gasoline may be fractionated and/or hydrotreated before the removal of its sulfur compounds, while using it in a process of the present invention as a hydrocarbon containing fluid.

Composition of the sorbent impregnated with a particulate catalyst, having a reduced valence catalyst component in this invention is a composition that offers the ability to enter into a chemical reaction and/or react physically with sulfur compound species. It is also desirable that the sorbent removes diolefines and other gum-forming compounds from cracked gasoline.

### Construction of particulate catalyst impregnated sorbent

### Sorbent support structure:

The carrier for the catalyst can be carbon, zeolite, a perlite form or any other structurally sound, porous sorbent. The catalyst is impregnated inside the carrier within the structure designed. The surface area of the carrier, the pore size of the carrier as well as the density of pores surrounding the catalyst, toward the center of the carrier's concentricity, are to the same extent important factors in the design of the structure of the carrier. Normally the surface area would vary from about 500 up to 2500 m²/g. The pore size ranges from 5 to 100 angstrom while the density increases toward the center of the carrier. The optimized carrier will have the maximum of the surface area (2500 m²/g) and the largest pore size toward the outer area (100 angstrom), maintaining this size unchanged toward the center of the carrier, where the bonded catalyst is present. The general principle of optimization for the carrier is to push the parameters to the extreme values so that the integrity of the structure could not be lost. A metal, alkali or alkali earth metal, metal oxide, a bimetallic combination (combination of metals) may act as the catalyst.

Among the amorphous carbon materials, which are suitable to be utilized as particulate support of the catalyst described in this invention, there are some products known as "onion carbon" or, saying differently, micro-sphere carbon structures. These are onion-like structures with a diameter of 100 angstroms and more, which are firmly introducing into the surrounding carbon, representing susceptible catalyst impregnation sites or surface sites.

Generally, the sorbent carbon compounds impregnated with catalyst, are formed by introduction of extra atoms or molecules into a host structure without breaking the chemical bonds of the host material. Carbon atoms in graphite are located in the points of a hexagonal lattice and kept in place due to relatively strong covalent bonds. The hexagonal lattices, on the contrary, are displaced with each other and held in place by weaker Van Der Waals forces. The lower bond energy between the lattice and many defects make the graphite particles susceptible to the penetration of the catalyst. For the production of the carbon sorbent impregnated with the particulate catalyst, graphite powder is treated by heat in the presence of a gaseous or liquid agent. Actual impregnation begins at the pressure which depends upon the polarity and the structural disorder of the graphite. That is why it is possible to realize expansion to over 100 times of their original particle size.

A zeolite, which may be used in this invention, has a substitution of sodium cations in a synthetic faujasite structure with the catalyst, preferably Zn, Ag, Cu, Ni, Co and Sn, or a combination thereof, that increases the adsorption capacity of the synthetic faujasites in 1,5-3,0 times for certain target elements or compounds. It is also indicated in the invention that these catalyst sorbents created on the basis of synthetic faujasites enhance adsorption capacity even at low concentrations of the target elements and compounds, even below 1 ppm. Such high capacity to remove target elements and compounds results in an enhanced level of feedstock purification. Those zeolites are suitable for use, which have a relatively high silica-to-alumina ration and a pore size greater than about 10 angstrom in diameter. The synthetic zeolites, which are suitable for this purpose are as follows: zeolites X, Y, L, ZK-4, ZK-5, E, H, J, M, Q, T, Z, alpha and beta, ZSM-types and omega. Yet, the preferred faujasites are those, particularly like zeolite Y and zeolite X, which have a pore size greater than 10 angstrom in diameter. For example, zeolite Y and X have a pore size of approximately 13 angstrem, that is large enough for molecules of the target elements and compounds to enter, while larger molecules of converted (oxidized) target elements and compounds could leave.

The present invention is characterized with the fact that an acceptable range of ion exchange for catalyst ions in the faujasite structure is about 50-75%. The transformation of contaminants contained in target elements and compounds is less efficient if substitution levels are below 50-75%. Accordingly, catalyst forms of zeolite faujasites with ion exchange levels of from about 50% up to about 75%. Therefore, catalyst forms of zeolite faujasites with ion exchange levels of from about 50% to 75% possess a capacity for adsorbing certain target elements and compounds, proving a high level of adsorption of such compounds from liquid streams.

It is preferable that the balance of the ions in the faujasite structure is alkali and/or alkaline earth metals: from 25% up to 50% respectively of alkali and/or alkaline earth metals. It is desirable that the alkali and/or alkali earth metals are selected from sodium, potassium, calcium and magnesium.

It is necessary to stress that the present catalysts adsorb the target elements and compounds reversibly. The faujasite X or Y zeolites adsorb significant amount of the target elements and compounds by means of physical sorption opposite to transition of metal oxides of other zeolites, such as zinc oxide and manganese oxide (the respective Zn, Ag, Cu, or Ni, Co, Sn), or a combination thereof. These catalysts or bimetallic combinations can desorb these target elements and compounds by washing with a polar organic or inorganic solvent. Thus, it has been found out that these particulate catalyst impregnated sorbents can serve as regeneratable adsorbents having the enhanced capacity for adsorption of target elements and compounds. The term "perlite" used herein is the petrographic term specifying a siliceous volcanic rock, which occurs in nature all over the world. Its distinctive property, which makes it dissimilar to the other volcanic minerals, is the fact that when heated to certain temperatures it acquires an ability to expand four to twenty times of its original volume. When heated above 815° to 875° C, crushed perlite expands because of the presence of the water combined with the crude perlite rock. The combined water vaporizes during the heating process and creates a great number of tiny bubbles located in glassy particles softened with the heat. It is these tiny glass sealed bubbles, which make perlite so light by weight. Weight of perlite cannot be more than 2.0 lbs per cubic foot.

Perlite, which may be used in this invention, will be present in the sorbent support composition in an amount of about 15 up to 30% of the weight. In the manufacture of a sorbent composition of such type for the present invention, the support component is usually prepared by mixing the compounds of the support component, zinc tin oxide, perlite, and alumina in appropriate proportions by any suitable way or method, which provides for the intimate mixing of such components in order to form a substantially homogeneous structure consisting of zinc tin oxide, perlite, and alumina. To achieve dispersion of such components, any means for mixing them can be used, for example: mixing tumblers, stationary shells or troughs, batch or continuous mixers, and impact mixers and others.

As a result of this mixing, an adsorbent medium is formed, which is capable for adsorbing or the absorption of target elements or compounds as well as filtering the particulate material from water polar solutions, hydrocarbons, hydrocarbon by-products or other carbonaceous liquid compounds. This invention provides an attrition resistant sorbent impregnated with the particulate catalyst that remains stable under basic conditions of the process, which are generally encountered when adsorbent materials are regenerated after adsorbing or the absorption of target elements or compounds.

Smaller adsorbent particles enhance both the heat and mass transfer for a feedstock at changing conditions as well. Smaller particles are more difficult to break than larger particles, because smaller particles have fewer faults, defects or discontinuities. Porous particles of a given size are more resilient than non-porous particles of the similar size and less subjected to fracture.

A disadvantage of smaller particles may appear the fact that for the changing conditions (such as type of liquid, inlet temperature, and adsorbent saturation rate), a smaller cross section flow is required. This requirement is offset by the need for a larger adsorbent inventory for a given bed height, which is provided by a larger diameter. Expansion of the bed height can help offset this disadvantage of smaller particles.

Without these unique physical characteristics of the sorbents, impregnated with particulate catalyst, it would be impossible to obtain the numerous advantages of this invention. Other materials fail to include both the low bulk density of the carbon catalyst impregnated sorbent and its high adsorption capacity, low cost of its fabrication from the available materials as well as its high absorption capacity. Due to the fact that carbon has been already used previously in some other applications, several inexpensive methods of fabrication have been developed to produce material, which may be effectively utilized in the present invention. Most of these fabrication processes depend on the use of carbon as a starting material.

### Manufacture of Particulate Catalyst Impregnated Sorbent

The catalyst component(s) may be incorporated into, or within the structure of the sorbent calcined and preferably spray-dried, by any suitable ways or methods used for incorporating the catalyst component(s) into or within such a substrate material as the dried and calcined particulates, which results in the formation of a catalyst impregnated sorbent composition. This composition can then be dried under any acceptable condition and calcined under a calcining condition to end up with obtaining a dried, calcined, promoted particulate catalyst impregnated sorbent. The dried, calcined, promoted particulates can then be subjected to reduction with the help of a reducing agent, preferably hydrogen, in order to provide thereby the formation of a sorbent composition in compliance with the present invention. For incorporating the catalyst components the following means can be used: impregnating, spraying and combinations thereof.

### Catalyst Metals

The metals, metal oxides or metal-containing compounds of the selected bimetallic catalyst can be added to the composition by impregnation of the mixture with a solution, either aqueous or organic, which contains the selected metal, metal oxide or metal containing compounds. Metal particles containing from 10 up to 1000 atoms are able to form the slight covalent bonds, the catalysts of the present invention are characterized with. If there are larger metal particles available in a structure, the strength of the chemical bonds decreases. As the size of the metal particles increases, the chemical binding strength drops finally to a value, which for the given size of the metal particles, is of no longer significance than for the binding strengths of conventional carbon supports.

The term " catalyst" used herein means a catalyst mixture derived from one or several metals, metal oxides or metal oxide precursors. For this purpose the metals are selected from the group as follows: cobalt, nickel, iron, manganese, zinc, copper, molybdenum, silver, tin, vanadium, tungsten, and antimony, wherein the bimetallic catalyst composition is in a substantially reduced valence state and wherein such catalyst is present in such amount which can effectively provide the removal of target elements and compounds from the host media. In the context of this invention low-valency metals are designated as metals being in the avalent, monovalent and divalent states.

Bimetallic catalyst combination has unique physical and chemical properties that are important to the chemistry of the sorbent composition invented and described herein. These bimetallic catalyst combinations are formed by the direct change and inter-exchange of the solute metal atomts for the solvent metal ones in the crystal structure. There are three basic factors that are favorable for the formation of bimetallic catalyst bonds: (1) the electronegativities of the both components are similar (2) the atomic radii of the two elements have to be within 20 percent of each other; and, finally (3) the crystal structures of both phases are similar. It is desirable that the catalytic metals (as well as the elemental metal and metal oxide), utilized in the sorbent composition invented, should meet at least two of the three aforesaid requirements.

Preferably, that the reduced-valence catalyst component is reduced nickel, cobalt, silver, copper, tin, zinc, or a bimetallic combination. Normally, the amount of reduced-valence catalyst component should be within the limits from about 15 up to about 40% of the total weight of the sorbent composition. In the instances when a bimetallic catalyst compound is contained in the catalyst component, a ratio of the two metals forming such bimetallic catalyst should be in the range of from about 10:1 to about 1:10. In the present method used for implementation of the present invention, the catalyst component is a bimetallic catalyst compound comprising silver and copper in a weight ratio of about 1:1, nickel and cobalt in a weight ratio of about 1:1, or zinc and tin in a weight ratio of about 2:1.

For the impregnation of the particulates it is desirable to use aqueous solutions of a catalyst component. Dissolving metal-containing compounds, in the form of metal salts, such as, for example a metal chloride, a metal nitrate, a metal sulfate, and the combinations thereof, in such solvents as, water, alcohols, esters, ethers, ketones, and their combinations, the required impregnating solution is obtained, which is contained in the aqueous solution formed thereof. It is necessary that the weight ratio of the metal catalyst component to the aqueous medium of such aqueous solution could be in the range of from 2.0:1 to 2.5:1.

After the particulates of the sorbent or the calcined base support sorbent have been impregnated with the catalyst component, the composition obtained thereof is first dried under the required condition, and then calcined. As a result of this, the dried calcined particulates of the catalyst sorbent are obtained, which are subjected to reducing by means of a suitable reducing agent, preferably hydrogen in order to produce a composition having a substantially reduced-valence catalyst component, preferably a zero valence catalyst component. Such catalyst component with zero valence will allow to remove the target elements or compounds from a host media fluid.

Bimetallic catalyst compounds may be added to the support components either prior to drying and calcining, or by impregnating the dried and calcined support particulates with an aqueous or organic solution comprising of the elemental metals, metal oxides or metal-containing compounds of the selected catalyst group after the initial drying and calcining.

A preferred method of incorporating is impregnating. In order to do this any standard technique for impregnation of a wet material (i.e., complete filling of the pores of a material with a solution of the incorporating elements) is used. The impregnating solution, having the desirable concentration of a catalyst component, impregnates the particulate sorbent support, which can be then subjected to subsequent drying and calcining followed by reduction with the help of such reducing agent as hydrogen. The impregnating solution can be any aqueous solution used in the amounts allowing for the complete impregnation of the particulates of support component in order to obtain the appropriate amount of catalyst component that provides, after its reduction with a reducing agent, a certain amount of reduced catalyst component quite sufficient for removal of target elements and compounds from a host media, as long as this fluid is treated in accordance with the technological process of the present invention.

In order to prepare the spray-dried sorbent material, the catalyst component can be added to the sorbent material after it has been dried with a spray, as a component of the original mixture, or they can be added after the original mixture has initially been spray-dried and calcined. If a catalyst component is added to the spray-dried sorbent material after it has been dried with a spray and calcined, the spray-dried sorbent material should be dried and calcined for a second time. Drying of the spray-dried sorbent material for a second time should preferably take place at a temperature generally in the range of from about 90°C up to about 300°C. Period of time required for conducting the drying for a second time lies generally in the range of from about 1.5 hours to 4 hours, and it is preferable that such drying for a second time can be carried out at a pressure value equal to atmospheric. After spray-drying the sorbent material is calcined, preferably in an oxidizing atmosphere in the presence of oxygen or air, under the conditions required. Any well-known drying method (or methods), such as, for example, air drying, heat drying, and the like or combinations thereof can be used. It is suggested that a temperature would be maintained within the range of from 480°C up to about 780°C during the calcining conditions, a pressure in the range of from about 7 pounds per square inch to about 150 pounds per square inch, and a time period in the range of from about 2 up to 15 hours.

Solutions of the selected metal, which are formed of the metal itself, metal oxide or a precursor of the latter, can be used for impregnation of the particulate support. Such impregnation can be executed step by step and after that the particulate support is dried or both dried and calcined prior to the addition of the second metal component to the support.

Following the impregnation of the compositions with the appropriate bimetallic catalyst, the resulting impregnated particulate is then dried and calcined under the aforesaid conditions prior to be subjected to reduction with participation of the reducing agent, preferably hydrogen. After the bimetallic catalyst has been incorporated in the particulate support, the valence of the metals can be reduced by drying of the resulting composition followed by calcination and, finally, by its reduction with participation of a suitable reducing agent, preferably hydrogen, in order to produce a composition containing metals of substantially reduced valence, which are present in the amount sufficient to remove the target elements and compounds from a host media.

If desired the components of the bimetallic catalyst can be added to the support individually rather than by co-impregnation.

The resulting product is a sorbent composition that is capable to adsorb or absorb target elements or compounds as well as filter particulate material from water polar solutions, hydrocarbons, hydrocarbon by-products or other carbonaceous liquid substances. This invention provides an attrition resistant sorbent impregnated with particulate catalyst, that remains stable under the conditions, which are commonly encountered in practice when adsorbent materials are regenerated after the adsorption or the absorption of target elements or compounds.

### Carbon Notes

The most preferable method to obtain the unstructured carbon is to vaporize pure graphite in an apparatus of closed type, containing at least two electrodes and having an inert atmosphere to produce a vaporized composition. It is necessary to cool the vapor rapidly so that the composition could deposit on a surface of the apparatus and/or the electrodes, and then remove any impurities contained in the composition by extraction with the solvent.

All catalytically active material is attached to the surface of the particulate catalyst sorbent used in the oxidation-adsorption part of the process of the present invention, so it is very accessible for the components of the reaction, and the superior catalytic properties of the metal-containing catalysts described in the invention can be explained by this fact. In the case with the carbon sorbent compounds, impregnated with the particulate catalyst, a significant portion of the catalytically active metal is located inside the macroscopic particles of the catalyst, the carbon sorbent is impregnated with, that accordingly improves the selectivity for the components of the reaction being catalyzed. The superior stability of the metal-containing catalysts as per this invention, in comparison with a simple carbon sorbent is explained by the slight covalent bonds formed with the metal or bimetallic combinations.

An aspect of the invention, which is associated with the qualitative changes that can be achieved in the catalytic properties of the chemically bonded metals, is particularly interesting. It was possible to demonstrate that the structural properties of the metal particles contained in the systems described in the invention differed greatly from the properties of the simple carbon sorbent systems. These structural differences are accounted for the qualitatively different attractive interactions between the metal particles and the carbon support system involved. However, the structural differences in the metal particles do not solely concern just geometrical nature; it is assumed that there are also differences in the electronic structure, as a result of which the active centers appear on the surface of the metal, which is considered to be the governing factor for the heterogeneous catalysis of reactions.

In compliance with the method used in this invention carbon is vaporized in a non-oxidizing atmosphere through the utilization of a special electric arc, struck between at least two graphite electrodes in a vacuum apparatus. During this process one electrode:
a/ works with alternating current or direct current under a pressure of 100 Pa or less in a vacuum apparatus, the walls of which are cooled, the product deposited on the cooled walls, or
b/ works with direct current under a pressure of 1 to 100 kPa and arc lengths of 0.1 to 20 mm. In this case the product is accumulated on the electrode connected to the negative pole of the power supply, or
c/ with alternating current under a pressure of 1 to 100 Pa and arc lengths of 0.1 to 20 mm while the product is accumulated on the carbon electrodes.

As an option, as per one of embodiments of the present invention, the product of a), b) or c) may thereafter react with a metal, or metal oxide, low-valency compound or combination of a catalytically active metals, as it was proposed above.

The graphite used for this purpose should be as pure as possible. It is preferable to work in an inert (noble) gas atmosphere, most preferably of which are helium, argon or a mixture of helium and argon.

In case the unstructured carbon is obtained according to procedure a), it is expedient to cool the walls of the vacuum apparatus with water. However, it is possible to use some other cooling methods or coolants. For preparing to produce the unstructured carbon it is also advantageous to work with two carbon electrodes, since this is how a commercially available apparatus is usually equipped. Yet, for the proposed method it is also possible to use modified electric-arc equipment having more than two graphite electrodes.

The reaction of the carbon with the metal compound is preferably carried out in the absence of air where the supporting carbon is suspended in a solvent in which the metal compound is soluble. It is advantageous to work at an elevated temperature, preferably at the reflux temperature of the solvent. Under such conditions, the reaction normally lasts for between 15 to 25 hours. If the support material contains any impurities, they must be removed prior to entering into the reaction, preferably by extraction with participation of a suitable organic solvent.

The temperature range for the reaction of the carbon with the metal fluctuates between the solidification point of the solvent and its boiling point. The boiling point of the solvent can be slightly higher due to applying an elevated pressure.

While fabricating the carbon sorbent, impregnated with particulate catalyst according to the technological process of this invention, the thermal shock of impregnated carbon compounds formed previously, takes place. The process of oxidizing and expansion of carbon has been described in the literature before, and is well-known to any specialist having expertise in the art of carbon material manufacturing. The volume of the oxidizing solution used is not so important as long as it is sufficiently available in order to distribute the suspended particulate mass and ensure effective impregnation thereby. Large industrial production may require relatively greater volumes or extended period of time for mixing. Sometimes, in order to speed up the rate of oxidation, the temperature may be elevated to the level between 50° C and 100°C. After the sorbent impregnated with the required catalyst has been formed, its particles are thoroughly rinsed with water and then rapidly heated to about 1000° C. This heating, which results in further expansion, is generally executed in an electrical furnace where it is possible to obtain substantial amounts of expanded particles.

Depending on the fabrication process used, the bulk densities of the sorbent impregnated with a particulate catalyst may vary. These properties are important in that case when they refer to the absorption capacity of the particulate catalyst impregnated sorbent. In particular, the lower the bulk density is, the higher the specific surface area will be, and, therefore, the higher the absorption capacity for target elements and compounds will be. Like some other particulate catalyst impregnated compounds, as mentioned above, these sorbent particles impregnated with carbon are resistant to temperature, aging, and many corrosive media.

It would be impossible to obtain those numerous advantages of the present invention without the unique physical characteristics of the particulate catalyst impregnated sorbents. Other materials fail to combine the low bulk density of the carbon catalyst impregnated sorbent with its high adsorption capacity, cost efficiency for fabrication from readily available materials and high absorption capacity. Due to the fact that carbon was used earlier for other applications, several inexpensive fabrication methods for this material have been developed, which may be effectively employed in the present invention. Most of these fabrication processes are based on the use of inexpensive carbon as a starting material.

### Zeolite Notes

In order to use zeolite as an adsorbent for this invention, it is necessary, as per an ion exchange technique, that one or more following metals: silver, copper, zinc, tin, cobalt and nickel are supported on a zeolite. In particular, compounds of silver, copper and the like are dissolved in water to produce an aqueous solution, while using which the ion exchange occurs. The compounds of the metals should exchange their ions with cations in the zeolite, and, correspondingly, it should be such a metal compound that is capable to dissolve in water and exist as a metal ion in the aqueous solution. The present aqueous solution is brought into contact with a zeolite and in accordance with the general ion exchange procedure, including (1) an agitation procedure, (2) an impregnation procedure or (3) a flow procedure, the cations in the zeolite are exchanged with these metal ions. After that, the zeolite is washed with water and dried to obtain an adsorbent as per the process of this invention. Despite of the fact, that the zeolite may be calcinated after drying, this is not always necessary.

In order to produce a final adsorbent-catalyst product the zeolite powder is then mixed with a binder. Ordinary mineral or synthetic materials, such as clays (kaolinite, bentonite, montmorillonite, attapulgite, smectite, etc.), silica, alumina, alumina hydrate, alumina trihydrate, alumosilicates, cements, etc. can be used as a binder. The mixture is then thoroughly mixed and worked into itself and with 18-35% water to produce a paste, which is then formed in the shape of particulates, spheres, micro-spheres, etc. The product is then washed with deionized water to remove excess ions, dried, and calcined at a temperature range of from about 250° C to about 550° C.

According to the present invention the adsorbent-catalysts can provide an improved and more reliable protection for the catalysts in large-scale commercial processes.

Typically zeolites have silica-to-alumina mole ratios of about 2, and the average pore diameters from about 3 to 15 angstroms. They also generally contain cations of such alkali metals as sodium and/or potassium, and/or cations of such alkaline earth metals as magnesium and/or calcium. In order to increase the catalytic activity of the zeolite, it may be required to decrease the alkali metal content of the crystalline zeolite to less than about 0,5% weight. Reduction of the alkali metal content as it is known in practice, may be carried out by exchange with one or more cations taken from the Groups from IIB through VIII of the Periodic Table of Elements.

### Perlite Notes

The process of manufacturing perlite sorbent compositions of the present invention, which may be used for separation and removal, consists of the following steps:
(a) mixing a support component in order to form a mixture looking like the consistencies as follows: wet mix, dough, paste, slurry, and the like and combinations thereof;
(b) particulating, preferably with the use of spray-drying method, the mixture to form macroparticulates representing the following shapes: granules, spheres, micro-spheres, and the like and combinations thereof, but preferably micro-spheres;
(c) drying the particulate under the conditions required as described above to form dried particulates;
(d) calcining the dried particulate under the conditions required as disclosed herein to form a calcined particulate;
(e) incorporating, using preferably the method of impregnation, a catalyst component into the calcined particulate to form a particulate catalyst impregnated sorbent;
(f) drying the particulate sorbent under the required conditions as disclosed above to form a dried, particulate catalyst impregnated sorbent;
(g) calcining the dried, particulate sorbent under the required conditions as disclosed above to form a calcined, particulate catalyst impregnated sorbent; and, finally,
(h) reducing the calcined, particulate catalyst impregnated sorbent with the use of a suitable reducing agent in order to produce a sorbent composition having a catalyst component with reduced-valence, and wherein the reduced-valence catalyst component is present in an amount sufficiently effective for the removal of target elements and compounds from a host media while the fluid containing such target elements and compounds, is contacted with a sorbent composition (compositions) according to the process of this invention.

When perlite has been selected as a sorbent, any suitable compound of alumina having the properties similar to the cement-like properties, which can help to bind the particulate composition together, can be used as the alumina component of the base support. For the present case alumina is more preferable, but peptized alumina, colloidal alumina solutions as well as generally those alumina compounds produced by dehydration of alumina hydrates may be also used.

All components of the support material are mixed so as to obtain a resulting mixture in a form looking like the following consistence: wet mix, dough, paste, slurry, and the like. Such resulting mixture can then be shaped to form the following particulate: a granule, a sphere, or a micro-sphere. For example, if the resulting mixture is shaped in the form of a wet mix, the wet mix can be densified, dried under drying conditions as disclosed above, calcined under calcining conditions as disclosed above, and thereafter shaped, or particulated, by means of granulation of the densified, dried, calcined mixture to form micro-spheres in the long run. Also, for example, when the mixture of the components of the support material results in a consistency of dough or paste, such mixture can then be shaped to form particulates. The resulting particulates are then dried under drying conditions and then calcined under calcining conditions as disclosed above. The mix resulted in the form of a slurry is more preferrable, because in this case the particulation of such slurry is achieved by spray drying the slurry to form micro-spheres having a size in the range of from about 10 to about 500 microns. Such micro-spheres are then dried under drying conditions and calcined under calcining condition as disclosed above.

When the spray-drying method is employed for particulation, a dispersant component may be utilized and it can be any suitable compound that activates the spray drying ability of the mix shaped in the form of a slurry. In particular, such components are useful in order to prevent deposition, precipitation, settling, agglomerating, adhering, and caking of solid particles in a fluid medium.

The silica used in the preparation of such sorbent compositions may be either in the form of silica itself or in the form of one or more silicon-containing compounds. For the present invention any suitable type of silica may be utilized in the sorbent compositions. Examples of such types of silica can involve diatomite, silicalite, silica colloid, flame-hydrolyzed silica, hydrolyzed silica, silica gel and precipitated silica, but diatomite is more preferred. In addition, silicon compounds that are convertible to silica such as silicic acid, sodium silicate and ammonium silicate can also be used. It is preferred that the silica is in the form of diatomite. The silica is normally present in the sorbent composition in the amount of from about 20% of the weight up to about 60% of the weight, where the weight percent shows the percentage content of cilica, while 100% is considered to be the total weight of the sorbent composition.

The alumina is normally present in the sorbent composition in the amount of from about 5,0% of the weight up to about 20% of the weight, where the weight percent shows the percentage cintent of alumuna, while 100% is considered to be the total weight of the sorbent system. Use of zeolite and perlite is an optimum and more preferred, especially when the adsorption properties in the oxidation step of this process require the specific adsorptive qualities designed by either the target elements or compounds or the host media.

Thus, the results of this invention are as follows: the technological process whereby target elements and compounds can be successfully removed from contaminated water streams, hydrocarbon fluid streams or feed streams, and other carbonaceous liquids. It should be further stressed that all objectives and aims set forth for this invention have been accomplished and its advantages have been described in details.

Accordingly, all the disclosed methods, their embodiments, instrumentalities, peculiarities and means for realization have to be applied in practice but they should not be exhaustive with the aforesaid options or mannerisms for practicing the disclosed principles of the invention. Though the invention has been described in connection with specific embodiments, it is evident and understood that the invention is not limited to the embodiments disclosed.

## Claims

1. A method for treatment of liquid media, which includes adsorption of impurities contained in a liquid medium by a sorbent, separation and removal of impurities adsorbed, is distinguished by the fact that the impurities are oxidized by mixing the liquid medium with an oxidizing agent using the particulate catalyst impregnated sorbent, the oxides of impurities are adsorbed while separation and removal of the latter is executed by the washing the particulate catalyst impregnated sorbent with a polar solvent, and regeneration of the sorbent is carried out with heat and/or by the blowing through a hot gas.

2. The method of claim 1, wherein a liquid medium is preliminary fractionated with the fractions having different boiling points and concentration of impurities with the subsequent separate treatment of the fractions.

3. The method of claims 1 or 2, wherein the treated medium is subjected to additional single or multiple purification.

4. The method with respect to any of claims 1-3, wherein the oxides of impurities are separated by the distillation of a solvent.

5. The method with respect to any of claims 1-4, wherein the liquid media is water.

6. The method with respect to any of claims 1-4, wherein the liquid media is hydrocarbon.

7. The method with respect to any of claims 1-4, wherein the liquid media are other polar aqueous liquids.

8. The method with respect to any of claims 1-4, wherein the liquid media is a hydrocarbon by-product.

9. The method with respect to any of claims 1-4, wherein the liquid media are other carbonaceous liquids.

10. The method with respect to any of claims 1-5, wherein the impurities being removed are hydrocarbons.

11. The method of claim 10, wherein the said hydrocarbon is selected from the group as follows: black oil, fuel oil, machine oil, crude oil, mazoot, coke distillate, naphtha, kerosene, diesel, benzene, toluene and gasoline.

12. The method with respect to claims 1 or 5, wherein the impurities being removed are other nonmetallic solids.

13. The method with respect to claims 6 or 8, wherein the liquid media is selected from the group as follows: cracked gasoline, diesel fuels, kerosene, vacuum distillates, fuel oils, light gas oil, crude oil, heavy gas oil, vacuum gas oil, PCC light cycle oil, coker gas oil, mazoot and naphtha.

14. The method of claims 1 or 6, wherein the impurities being removed are sulfur containing compounds.

15. The method according to one of claims 1, 5 or 6, wherein the impurities being removed are metals. ,

16. The method of claims 1 or 6, wherein the impurities being removed are nitrogen compounds, aromatics and poly nuclear aromatics.

17. The method of claim 14, wherein the sulfur compounds comprise of at least one of the following elements: thiophene, mercaptan, benzothiophene, dibenzothiophene, naphthobenzothiophene, dinaphthobenzothiophene, and related higher aromatic thiophenes, and the alkyl and aromatic homologues of these compounds.

18. The method of claim 9, wherein the liquid media is a liquid coal.

19. The method of claim 1, wherein oxidizing of impurities is performed using air as an oxidant.

20. The method of claim 1, wherein oxidizing of impurities is performed using oxygen as an oxidant.

21. The method of claim 1, wherein oxidizing of impurities is performed using ozone as an oxidant.

22. The method of claim 1, wherein oxidizing of impurities is performed using peroxide as an oxidant.

23. The method of claim 1, wherein oxidizing of impurities is performed in the presence of a particulate catalyst impregnated sorbent.

24. The method with respect to any of claims 1, 19, 20, 21, 22, wherein providing an oxidizing gas is performed by forming the oxidizing gas into micron size bubbles.

25. The method of claim 23, wherein the particulate catalyst impregnated sorbent is comprised of a metal, alkali, or alkali earth metal, metal oxide, or a bimetallic combination (combination of metals), and the catalyst is impregnated into a carbon particulate, silica, or an alumina, a zeolite, a perlite form, or any other structurally sound porous sorbent.

26. The method of claim 23, wherein the particulate catalyst impregnated sorbent is comprising of the catalyst metals selected from the following group: copper, zinc, silver, nickel, cobalt, iron, manganese, molybdenum, vanadium, tungsten, antimony and tin.

27. The method with respect to any of claims 25, 26, wherein the particulate catalyst impregnated sorbent includes the catalyst component comprising a bimetallic catalyst component, which in its turn should comprise a ratio of the two metals forming such a component in the range of from about 10:1 to about 1:10

28. The method of claim 25, wherein in the particulate catalyst impregnated sorbent the catalyst metal is silver or copper or a mixture thereof.

29. The method of claim 28, wherein in accordance with the catalyst bimetallic composition the catalyst component is a bimetallic catalyst component comprising silver and copper in a weight ratio of about 1:1.

30. The method of claim 25, wherein in the particulate catalyst impregnated sorbent the catalyst metal is cobalt or nickel or a mixture thereof.

31. The method of claim 30, wherein in accordance with the catalyst bimetallic composition the catalyst component is a bimetallic catalyst component comprising nickel and cobalt in a weight ratio of about 1:1.

32. The method of claim 25, wherein in the particulate catalyst impregnated sorbent the catalyst metal is zinc or tin or a mixture thereof.

33. The method of claim 32, wherein in accordance with the catalyst bimetallic composition the catalyst component is a bimetallic catalyst component comprising zinc and tin in a weight ratio of about 2:1.

34. The inethod with respect to claims 25 or 26, wherein the particulate catalyst impregnated sorbent comprises the reduced-valence catalyst metal components generally in the range of from about 15 to 40 weight percent of the total weight of the sorbent composition.

35. The method of claim 25, wherein the particulate catalyst impregnated sorbent comprises the alkali or alkali earth metals selected from the following group: sodium, potassium, calcium and magnesium.

36. The method of claim 25, wherein the sorbent porous structure of the particulate catalyst impregnated sorbent is carbon.

37. The method of claims 23 or 36, wherein the reaction of the carbon with the metal compound is preferably performed in the absence of air while the supporting carbon is in suspension in such a solvent, in which the metal compound is soluble.

38. The method of claim 25, wherein the sorbent porous structure of the particulate catalyst impregnated sorbent is a zeolite.

39. The method of claim 38, wherein it is preferred to use such zeolites as the faujasites, particularly zeolite Y and zeolite X, those, having a pore size greater than 10 angstrom in diameter.

40. The method of claim 39, wherein the ion exchange of catalyst ions in the faujasite structure is considered to be acceptable if it is in the range of about 50-75%.

41. The method of claim 25, wherein the sorbent porous structure of the particulate catalyst impregnated sorbent is a perlite form.

42. The method of claim 41, wherein the perlite is present in the sorbent support composition in an amount of from 15 to 30 weight percent.

43. The method of claim 1, wherein the solvent is a polar organic and/or inorganic solvent which include aromatics, halogenated aromatics, organo-chlorinated compounds, ketones and alcohols.

44. The method of claim 43, wherein the polar organic solvent is one of toluene, acetone, methanol, ethanol, dichloromethane, dichloroethane.

45. The method of claim 43, wherein the polar organic solvent is dichlorobenzene.

46. The method of claim 1, wherein the polar solvent is a combination of solvents as follows, including aromatics, halogenated aromatic, organo-chlorinated compounds, ketones and alcohols.

47. The method of claim 46, wherein the combinations of polar solvents are selected from the list as follows: toluene, dichlorobenzene, dichloromethane, dichloroethane, cyclopentane, acetone, ethanol and methanol.

48. The method of claim 1, wherein for drying the particulate catalyst impregnated sorbent is heated up to the temperatures from 15° C to 150° C, dependent upon the vapor rate of the polar solvent used to wash the sorbent.

49. The method of claim 48, wherein the blowing through the hot gas is used in addition to the heat.

## Patentansprüche

1. Verfahren zur Behandlung von flüssigen Medien, umfassend die Adsorption von in einem flüssigen Medium enthaltenen Verunreinigungen durch ein Sorbens, das Trennen und das Entfernen der adsorbierten Verunreinigungen, **dadurch gekennzeichnet, dass** die Verunreinigungen oxidiert werden, indem das flüssige Medium unter Verwendung des mit einem partikelförmigen Katalysator imprägnierten Sorbens mit einem Oxidationsmittel vermischt wird, die Oxide der Verunreinigungen adsorbiert werden, während deren Trennung und Entfernung durch Waschen des mit einem partikelförmigen Katalysator imprägnierten Sorbens mit einem polaren Lösungsmittel erfolgt und die Regeneration des Sorbens mittels Wärme und/oder Durchblasen von Heissgas erfolgt.

2. Verfahren nach Anspruch 1, wobei ein flüssiges Medium vorgängig fraktioniert wird, wobei die Fraktionen unterschiedliche Siedepunkte und Konzentrationen an Verunreinigungen aufweisen, und die Fraktionen anschliessend separat behandelt werden.

3. Verfahren nach Anspruch 1 oder 2, wobei eine zusätzliche einmalige oder mehrmalige Reinigung des behandelten Mediums erfolgt.

4. Verfahren nach einem der Ansprüche 1-3, wobei die Oxide der Verunreinigungen durch Destillieren eines Lösungsmittels getrennt werden.

5. Verfahren nach einem der Ansprüche 1-4, wobei das flüssige Medium Wasser ist.

6. Verfahren nach einem der Ansprüche 1-4, wobei das flüssige Medium ein Kohlenwasserstoff ist.

7. Verfahren nach einem der Ansprüche 1-4, wobei die flüssigen Medien andere polare wasserhaltige Flüssigkeiten sind.

8. Verfahren nach einem der Ansprüche 1-4, wobei das flüssige Medium ein Kohlenwasserstoff-Nebenprodukt ist.

9. Verfahren nach einem der Ansprüche 1-4, wobei die flüssigen Medien andere kohlenstoffhaltige Flüssigkeiten sind.

10. Verfahren nach einem der Ansprüche 1-5, wobei die zu entfernenden Verunreinigungen Kohlenwasserstoffe sind.

11. Verfahren nach Anspruch 10, wobei der genannte Kohlenwasserstoff aus folgender Gruppe ausgewählt ist: Russöl, Heizöl, Maschinenöl, Rohöl, Masut, Koksdestillat, Naphtha, Kerosin, Diesel, Benzol, Toluol und Benzin.

12. Verfahren nach Anspruch 1 oder 5, wobei die zu entfernenden Verunreinigungen andere nichtmetallische Feststoffe sind.

13. Verfahren nach Anspruch 6 oder 8, wobei das flüssige Medium aus folgender Gruppe ausgewählt ist: Crackbenzin, Dieselkraftstoffe, Kerosin, Vakuumdestillate, Heizöle, Leichtgasöl, Rohöl, Schwergasöl, Vakuumgasöl, PCC Light Cycle Oil, Kokergasöl, Masut und Naphtha.

14. Verfahren nach Anspruch 1 oder 6, wobei die zu entfernenden Verunreinigungen schwefelhaltige Verbindungen sind.

15. Verfahren nach einem der Ansprüche 1, 5 oder 6, wobei die zu entfernenden Verunreinigungen Metalle sind.

16. Verfahren nach Anspruch 1 oder 6, wobei die zu entfernenden Verunreinigungen Stickstoffverbindungen, Aromaten und polycyclische Aromaten sind.

17. Verfahren nach Anspruch 14, wobei die Schwefelverbindungen mindestens eines der folgenden Elemente umfassen: Thiophen, Mercaptan, Benzothiophen, Dibenzothiophen, Naphthobenzothiophen, Dinaphthobenzothiophen und verwandte höhere aromatische Thiophene sowie die Alkyl- und die aromatischen Homologe dieser Verbindungen.

18. Verfahren nach Anspruch 9, wobei das flüssige Medium eine flüssige Kohle ist.

19. Verfahren nach Anspruch 1, wobei das Oxidieren von Verunreinigungen mit Luft als Oxidans erfolgt.

20. Verfahren nach Anspruch 1, wobei das Oxidieren von Verunreinigungen mit Sauerstoff als Oxidans erfolgt.

21. Verfahren nach Anspruch 1, wobei das Oxidieren von Verunreinigungen mit Ozon als Oxidans erfolgt.

22. Verfahren nach Anspruch 1, wobei das Oxidieren von Verunreinigungen mit Peroxid als Oxidans erfolgt.

23. Verfahren nach Anspruch 1, wobei das Oxidieren von Verunreinigungen in Gegenwart eines mit einem partikelförmigen Katalysator imprägnierten Sorbens erfolgt.

24. Verfahren nach einem der Ansprüche 1, 19, 20, 21, 22, wobei das Bereitstellen eines oxidierenden Gases durch Bilden von mikrometergrossen Blasen aus dem oxidierenden Gas erfolgt.

25. Verfahren nach Anspruch 23, wobei das mit einem partikelförmigen Katalysator imprägnierte Sorbens ein Metall, ein Alkali- oder ein Erdalkalimetall, ein Metalloxid oder eine Bimetallkombination (Kombination von Metallen) umfasst und der Katalysator in den partikelförmigen Kohlenstoff, Siliciumoxid oder ein Aluminiumoxid, einen Zeolith, eine Perlitart oder ein beliebiges anderes strukturstabiles poröses Sorbens imprägniert ist.

26. Verfahren nach Anspruch 23, wobei das mit einem partikelförmigen Katalysator imprägnierte Sorbens Katalysatormetalle umfasst, die aus folgender Gruppe ausgewählt sind: Kupfer, Zink, Silber, Nickel, Cobalt, Eisen, Mangan, Molybdän, Vanadium, Wolfram, Antimon und Zinn.

27. Verfahren nach einem der Ansprüche 25, 26, wobei das mit einem partikelförmigen Katalysator imprägnierte Sorbens eine Katalysatorkomponente mit einer bimetallischen Katalysatorkomponente enthält, die ihrerseits ein Verhältnis der beiden diese Komponente bildenden Metalle im Bereich von ca. 10:1 bis ca. 1:10 aufweist.

28. Verfahren nach Anspruch 25, wobei das Katalysatormetall in dem mit einem partikelförmigen Katalysator imprägnierten Sorbens Silber oder Kupfer oder ein Gemisch davon ist.

29. Verfahren nach Anspruch 28, wobei gemäss der bimetallischen Zusammensetzung des Katalysators die Katalysatorkomponente eine bimetallische Katalysatorkomponente ist, die Silber und Kupfer in einem Gewichtsverhältnis von ca. 1:1 enthält.

30. Verfahren nach Anspruch 25, wobei das Katalysatormetall in dem mit einem partikelförmigen Katalysator imprägnierten Sorbens Cobalt oder Nickel oder ein Gemisch davon ist.

31. Verfahren nach Anspruch 30, wobei gemäss der bimetallischen Zusammensetzung des Katalysators die Katalysatorkomponente eine bimetallische Katalysatorkomponente ist, die Nickel und Cobalt in einem Gewichtsverhältnis von ca. 1:1 enthält.

32. Verfahren nach Anspruch 25, wobei das Katalysatormetall in dem mit einem partikelförmigen Katalysator imprägnierten Sorbens Zink oder Zinn oder ein Gemisch davon ist.

33. Verfahren nach Anspruch 32, wobei gemäss der bimetallischen Zusammensetzung des Katalysators die Katalysatorkomponente eine bimetallische Katalysatorkomponente ist, die Zink und Zinn in einem Gewichtsverhältnis von ca. 2:1 umfasst.

34. Verfahren nach Anspruch 25 oder 26, wobei das mit einem partikelförmigen Katalysator imprägnierte Sorbens die Katalysatormetall-Komponenten mit geringerer Valenz allgemein im Bereich von ca. 15 bis 40 Gewichtsprozenten des Gesamtgewichts der Sorbenszusammensetzung enthält.

35. Verfahren nach Anspruch 25, wobei das mit einem partikelförmigen Katalysator imprägnierte Sorbens die aus folgender Gruppe ausgewählten Alkali- oder Erdalkalimetalle enthält: Natrium, Kalium, Calcium und Magnesium.

36. Verfahren nach Anspruch 25, wobei die poröse Sorbensstruktur des mit einem partikelförmigen Katalysator imprägnierten Sorbens Kohlenstoff ist.

37. Verfahren nach Anspruch 23 oder 36, wobei die Reaktion des Kohlenstoffs mit der Metallverbindung vorzugsweise in Abwesenheit von Luft erfolgt, während der Trägerkohlenstoff in einem Lösungsmittel suspendiert ist, in dem die Metallverbindung löslich ist.

38. Verfahren nach Anspruch 25, wobei die poröse Sorbensstruktur des mit einem partikelförmigen Katalysator imprägnierten Sorbens ein Zeolith ist.

39. Verfahren nach Anspruch 38, wobei bevorzugt Zeolithe wie die Faujasiten verwendet werden, insbesondere Zeolith Y und Zeolith X, mit einer Porengrösse von über 10 Ångström Durchmesser.

40. Verfahren nach Anspruch 39, wobei der Ionenaustausch von Katalysatorionen in der Faujasitstruktur als annehmbar betrachtet wird, wenn er im Bereich von ca. 50 - 75 % liegt.

41. Verfahren nach Anspruch 25, wobei die poröse Sorbensstruktur des mit einem partikelförmigen Katalysator imprägnierten Sorbens eine Perlitart ist.

42. Verfahren nach Anspruch 41, wobei der Perlit in der Trägerzusammensetzung des Sorbens in einer Menge von 15 bis 30 Gewichtsprozenten enthalten ist.

43. Verfahren nach Anspruch 1, wobei das Lösungsmittel ein polares organisches und/oder anorganisches Lösungsmittel ist und Aromaten, halogenierte Aromaten, organochlorierte Verbindungen, Ketone und Alkohole umfasst.

44. Verfahren nach Anspruch 43, wobei das polare organische Lösungsmittel eines von Toluol, Aceton, Methanol, Ethanol, Dichlormethan oder Dichlorethan ist.

45. Verfahren nach Anspruch 43, wobei das polare organische Lösungsmittel Dichlorbenzol ist.

46. Verfahren nach Anspruch 1, wobei das polare Lösungsmittel eine Kombination von Lösungsmitteln ist, die Aromaten, halogenierte Aromaten, organochlorierte Verbindungen, Ketone und Alkohole umfassen.

47. Verfahren nach Anspruch 46, wobei die Kombinationen von polaren Lösungsmitteln aus der folgenden Liste ausgewählt sind: Toluol, Dichlorbenzol, Dichlormethan, Dichlorethan, Cyclopentan, Aceton, Ethanol und Methanol.

48. Verfahren nach Anspruch 1, wobei das mit einem partikelförmigen Katalysator imprägnierte Sorbens zum Trocknen je nach der Verdampfungsgeschwindigkeit des zum Waschen des Sorbens verwendeten polaren Lösungsmittels auf eine Temperatur von 15 °C bis 150 °C erhitzt wird.

49. Verfahren nach Anspruch 48, wobei zusätzlich zur Erhitzung das Durchblasen des Heissgases angewendet wird.

## Revendications

1. Procédé de traitement de milieux liquides, comprenant l'adsorption d'impuretés contenues dans un milieu liquide par un sorbant, la séparation et l'élimination des impuretés adsorbées, **caractérisé en ce que** les impuretés sont oxydées en mélangeant le milieu liquide avec un oxydant à l'aide du sorbant imprégné d'un catalyseur particulaire, les oxydes d'impuretés sont adsorbés alors que leur séparation et élimination est effectuée en lessivant le sorbant imprégné d'un catalyseur particulaire au moyen d'un solvant polaire, et la régénération du sorbant est effectuée à l'aide de chaleur et/ou par soufflage d'un gaz chaud.

2. Procédé selon la revendication 1, où un milieu liquide est préalablement fractionné, les fractions ayant des points d'ébullition et concentrations d'impuretés différents et les fractions étant ensuite traitées séparément.

3. Procédé selon les revendications 1 ou 2, où le milieu traité est soumis à une purification unique ou multiple supplémentaire.

4. Procédé selon l'une quelconque des revendications 1-3, où les oxydes d'impuretés sont séparées par distillation d'un solvant.

5. Procédé selon l'une quelconque des revendications 1-4, où le milieu liquide est l'eau.

6. Procédé selon l'une quelconque des revendications 1-4, où le milieu liquide est un hydrocarbure.

7. Procédé selon l'une quelconque des revendications 1-4, où les milieux liquides sont d'autres liquides polaires aqueux.

8. Procédé selon l'une quelconque des revendications 1-4, où le milieu liquide est un sous-produit d'hydrocarbure.

9. Procédé selon l'une quelconque des revendications 1-4, où les milieux liquides sont d'autres liquides carbonés.

10. Procédé selon l'une quelconque des revendications 1-5, où les impuretés à éliminer sont des hydrocarbures.

11. Procédé selon la revendication 10, où ledit hydrocarbure est choisi parmi le groupe suivant: huile noire, fioul, huile mouvement, pétrole brut, mazout, distillat de coke, naphta, kérosène, diesel, benzène, toluène et essence.

12. Procédé selon les revendications 1 ou 5, où les impuretés à éliminer sont d'autres matières solides non métalliques.

13. Procédé selon les revendications 6 ou 8, où le milieu liquide est choisi parmi le groupe suivant: essence de craquage, carburants diesel, kérosène, distillats sous vide, fiouls, gas-oil léger, pétrole brut, gas-oil lourd, gas-oil sous vide, PCC light cycle oil, gas-oil de cokéfaction, mazout et naphta.

14. Procédé selon les revendications 1 ou 6, où les impuretés à éliminer sont des composés contenant du soufre.

15. Procédé selon l'une des revendications 1, 5 ou 6, où les impuretés à éliminer sont des métaux.

16. Procédé selon les revendications 1 ou 6, où les impuretés à éliminer sont des composés de l'azote, des hydrocarbures aromatiques et des hydrocarbures aromatiques polycycliques.

17. Procédé selon la revendication 14, où les composés du soufre comprennent l'un au moins des éléments suivants: thiophène, thiol, benzothiophène, dibenzothiophène, naphtobenzothiophène, dinaphtobenzothiophène et les thiophènes hydrocarbures aromatiques supérieurs apparentés et les homologues alkylés et hydrocarbures aromatiques de ces composés.

18. Procédé selon la revendication 9, où le milieu liquide est un charbon liquide.

19. Procédé selon la revendication 1, où l'oxydation d'impuretés est effectuée en utilisant l'air comme oxydant.

20. Procédé selon la revendication 1, où l'oxydation d'impuretés est effectuée en utilisant l'oxygène comme oxydant.

21. Procédé selon la revendication 1, où l'oxydation d'impuretés est effectuée en utilisant l'ozone comme oxydant.

22. Procédé selon la revendication 1, où l'oxydation d'impuretés est effectuée en utilisant le peroxyde comme oxydant.

23. Procédé selon la revendication 1, où l'oxydation d'impuretés est effectuée en présence d'un sorbant imprégné d'un catalyseur particulaire.

24. Procédé selon l'une quelconque des revendications 1, 19, 20, 21, 22, où l'apport d'un gaz oxydant est effectué en formant à partir du gaz oxydant des bulles de taille micrométrique.

25. Procédé selon la revendication 23, où le sorbant imprégné d'un catalyseur particulaire comprend un métal, métal alcalin ou métal alcalino-terreux, oxyde métallique ou une combinaison bimétallique (combinaison de métaux), et le catalyseur est imprégné dans le carbone particulaire, le silice ou une alumine, une zéolite, une forme de perlite ou tout autre sorbant poreux structurellement solide.

26. Procédé selon la revendication 23, où le sorbant imprégné d'un catalyseur particulaire comprend des métaux catalytiques choisis parmi le groupe suivant: cuivre, zinc, argent, nickel, cobalt, fer, manganèse, molybdène, vanadium, tungstène, antimoine et étain.

27. Procédé selon l'une quelconque des revendications 25, 26, où le sorbant imprégné d'un catalyseur particulaire contient le composant catalytique comprenant un composant catalytique bimétallique lequel devrait lui-même présenter un rapport des deux métaux formant un tel composant dans le domaine d'env. 10:1 à env. 1:10.

28. Procédé selon la revendication 25, où dans le sorbant imprégné d'un catalyseur particulaire le métal catalytique est l'argent ou le cuivre ou un mélange de ces derniers.

29. Procédé selon la revendication 28, où dans la composition catalytique bimétallique, le composant catalytique est un composant catalytique bimétallique comprenant l'argent et le cuivre à un rapport en poids d'env. 1:1.

30. Procédé selon la revendication 25, où dans le sorbant imprégné d'un catalyseur particulaire le métal catalytique est le cobalt ou le nickel ou un mélange de ces derniers.

31. Procédé selon la revendication 30, où dans la composition catalytique bimétallique, le composant catalytique est un composant catalytique bimétallique comprenant le nickel et le cobalt à un rapport en poids d'env. 1:1.

32. Procédé selon la revendication 25, où dans le sorbant imprégné d'un catalyseur particulaire le métal catalytique est le zinc ou l'étain ou un mélange de ces derniers.

33. Procédé selon la revendication 32, où dans la composition catalytique bimétallique, le composant catalytique est un composant catalytique bimétallique comprenant le zinc et l'étain à un rapport en poids d'env. 2:1.

34. Procédé selon les revendications 25 ou 26, où le sorbant imprégné d'un catalyseur particulaire contient les composants métalliques catalytiques ayant une valence réduite généralement dans le domaine d'env. 15 à 40 pour cent en poids du poids total de la composition du sorbant.

35. Procédé selon la revendication 25, où le sorbant imprégné d'un catalyseur particulaire comprend les métaux alcalis ou métaux alcalino-terreux choisis parmi le groupe suivant: sodium, potassium, calcium et magnésium.

36. Procédé selon la revendication 25, où la structure poreuse du sorbant imprégné d'un catalyseur particulaire est le carbone.

37. Procédé selon les revendications 23 ou 36, où la réaction du carbone avec le composé métallique est préférablement effectuée en l'absence d'air alors que le support carbone est en suspension dans un solvant dans lequel le composé métallique est soluble.

38. Procédé selon la revendication 25, où la structure poreuse du sorbant imprégné d'un catalyseur particulaire est une zéolite.

39. Procédé selon la revendication 38, où il est préféré d'utiliser des zéolites telles que les faujasites, en particulier la zéolite Y et la zéolite X, ayant une dimension des pores supérieure à 10 angström en diamètre.

40. Procédé selon la revendication 39, où l'échange d'ions catalytiques dans la structure de la faujasite est considéré acceptable lorsqu'il est dans le domaine d'env. 50 - 75 %.

41. Procédé selon la revendication 25, où la structure poreuse du sorbant imprégné d'un catalyseur particulaire est une forme de perlite.

42. Procédé selon la revendication 41, où la perlite est présente dans la composition support du sorbant en une quantité d'env. 15 à 30 pour cent en poids.

43. Procédé selon la revendication 1, où le solvant est un solvant organique et/ou inorganique polaire qui comprend les hydrocarbures aromatiques, hydrocarbures aromatiques halogénés, composés organochlorés, cétones et alcools.

44. Procédé selon la revendication 43, où le solvant organique polaire est l'un parmi le toluène, l'acétone, le méthanol, l'éthanol, le dichlorométhane, le dichloroéthane.

45. Procédé selon la revendication 43, où le solvant organique polaire est le dichlorobenzène.

46. Procédé selon la revendication 1, où le solvant polaire est une combinaison de solvants comprenant les hydrocarbures aromatiques, hydrocarbures aromatiques halogénés, composés organochlorés, cétones et alcools.

47. Procédé selon la revendication 46, où les combinaisons de solvants polaires sont choisis parmi la liste suivante: toluène, dichlorobenzène, dichlorométhane, dichloroéthane, cyclopentane, acétone, éthanol et méthanol.

48. Procédé selon la revendication 1, où pour le séchage le sorbant imprégné d'un catalyseur particulaire est chauffé à une température de 15 °C à 150 °C selon la vitesse d'évaporation du solvant polaire utilisé pour le lessivage du sorbant.

49. Procédé selon la revendication 48, où le soufflage du gaz chaud est utilisé en plus de la chaleur.
